(19) Europäisches Patentamt
European Patent Office
Office européen des brevets

(11) **EP 4 447 145 A1**

(12) **EUROPEAN PATENT APPLICATION**
published in accordance with Art. 153(4) EPC

(43) Date of publication:
**16.10.2024 Bulletin 2024/42**

(21) Application number: **23827551.5**

(22) Date of filing: **22.06.2023**

(51) International Patent Classification (IPC):
*H01M 4/134* (2010.01)       *H01M 4/38* (2006.01)
*H01M 4/36* (2006.01)        *H01M 4/62* (2006.01)
*H01M 4/587* (2010.01)       *H01M 10/0525* (2010.01)
*H01M 4/02* (2006.01)

(52) Cooperative Patent Classification (CPC):
**H01M 4/02; H01M 4/134; H01M 4/36; H01M 4/38;
H01M 4/587; H01M 4/62; H01M 10/0525**

(86) International application number:
**PCT/KR2023/008710**

(87) International publication number:
**WO 2023/249442 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.06.2022 KR 20220076787**

(71) Applicant: **LG Energy Solution, Ltd.
Seoul 07335 (KR)**

(72) Inventors:
• **PARK, Su Jin**
  **Daejeon 34122 (KR)**
• **LEE, Sangmin**
  **Daejeon 34122 (KR)**
• **LEE, Jaewook**
  **Daejeon 34122 (KR)**

(74) Representative: **Hoffmann Eitle
Patent- und Rechtsanwälte PartmbB
Arabellastraße 30
81925 München (DE)**

(54) **ANODE COMPOSITION, ANODE FOR LITHIUM SECONDARY BATTERY COMPRISING SAME,
AND LITHIUM SECONDARY BATTERY COMPRISING ANODE**

(57) The present invention relates to an anode composition, comprising a silicon-based active material, an anode conductive material, and an anode binder, wherein the silicon-based active material includes at least one selected from the group consisting of SiOx (where x=0) and SiOx (where 0<x<2), and includes 70 parts by weight or more of SiOx (where x=0) with respect to 100 parts by weight of the silicon-based active material, the silicon-based active material includes a carbon coating layer, the anode binder includes a rubber-based binder and a water-based binder, and the amount of the rubber-based binder is higher than the amount of the water-based binder.

[Figure 1]

## Description

[Technical Field]

The present application claims priority to and the benefit of Korean Patent Application No. 10-2022-0076787 filed in the Korean Intellectual Property Office on June 23, 2022, the entire contents of which are incorporated herein by reference.

The present application relates to a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high density energy batteries in recent years, research is being actively conducted on a method for increasing a capacity by using together a silicon-based compound such as Si/C and SiOx having a capacity 10 times or higher than that of a graphite-based material, as a negative electrode active material. However, as compared with graphite that is typically used, a silicon-based compound that is a high-capacity material has a large capacity but undergoes rapid volume expansion during charging, thereby disconnecting a conductive path to degrade battery characteristics.

In order to solve this problem, research has been conducted to apply SBR-CMC-based binders with excellent elongation properties, instead of aqueous binders (PAA, PAM, and the like) having a large modulus applied to existing silicon-based negative electrodes. In this case, while the connection between the active materials can be maintained using a rubber-based binder having high ductility despite the volume expansion, problems such as self-dispersibility of the silicon-based active material have occurred, and a problem of gas generation in the slurry also has occurred.

As a result, the aqueous binder is applied for the silicon-based negative electrode, and in order to solve the problem that occurs when a silicon-based compound is used as a negative electrode active material, a variety of methods are discussed, such as a method of controlling a driving potential, a method of additionally coating a thin film on an active material layer, a method of suppressing volume expansion itself such as a method of controlling a particle size of a silicon-based compound or a method for preventing disconnection of a conductive path.

Nevertheless, the above-mentioned problems have not been solved, and thus, it is necessary to study a method for solving the problems of volume expansion and gas generation even when a silicon-based negative electrode is used so as to realize high energy density.

Prior Art Literature

(Patent Literature 1) Japanese Patent Application Publication No. 2009-080971

[Detailed Description of the Invention]

[Technical Problem]

In the case of the silicon-based negative electrode, it was confirmed through research that the silicon-based active material is hydrated by -OH groups on the surface and gas is generated through electron transfer with the carbon of the conductive material, and it was accordingly found that the above problems can be solved when a combination of specific binders is used and a silicon-based negative electrode is subjected to a surface treatment.

Accordingly, the present application relates to a negative electrode composition capable of solving the above problems, and a negative electrode for a lithium secondary battery including the same, and a lithium secondary battery including a negative electrode.

[Technical Solution]

An exemplary embodiment of the present specification provides a negative electrode composition including a silicon-based active material; a negative electrode conductive material; and a negative electrode binder, wherein the silicon-based active material includes SiOx (x=0) and/or SiOx (0<x<2), and includes 70 parts by weight or more of SiOx (x=0) on the basis of 100 parts by weight of the silicon-based active material, wherein the silicon-based active material includes a carbon coating layer, wherein the negative electrode binder includes a rubber-based binder and an aqueous binder, and wherein a content of the rubber-based binder is higher than that of the aqueous binder.

Another exemplary embodiment of the present invention provides a negative electrode for a lithium secondary battery including a negative electrode current collector layer; and a negative electrode active material layer including the negative electrode composition according to the present application formed on one surface or both surfaces of the negative electrode current collector layer.

Finally, there is provided a lithium secondary battery including a positive electrode; the negative electrode for a lithium secondary battery according to the present application; a separator provided between the positive electrode and the negative electrode; and an electrolyte.

[Advantageous Effects]

In the case of the silicon-based negative electrode, it was confirmed through research that the silicon-based active material is hydrated by -OH groups on the surface and gas is generated through electron transfer with carbon of the conductive material. Accordingly, the negative electrode composition of the present invention includes the carbon coating layer on the surface of the silicon-based active material to suppress gas generation resulting from a reaction with -OH functional groups, thereby providing a negative electrode with excellent slurry stability and improved performance.

Moreover, in order to realize high energy density, the conductive material is used in a minimum amount, and accordingly, the conductive network between active materials during charging and discharging becomes more insufficient. To solve this problem, the negative electrode composition according to the present application can maintain better contact between the silicon-based active materials by including the rubber-based binder with excellent flexibility in a higher content, as compared with the aqueous binder, and improves the tortuosity of the negative electrode itself by minimizing the use amount of the conductive material, which is advantageous for diffusion resistance.

That is, in the case of the negative electrode composition according to the present application, the surface of the silicon-based active material is coated with carbon to increase durability so that a high content of the rubber-based binder can be applied.

[Brief Description of Drawings]

FIG. 1 shows a laminated structure of a negative electrode for a lithium secondary battery according to an exemplary embodiment of the present application.

FIG. 2 shows a laminated structure of a lithium secondary battery according to an exemplary embodiment of the present application.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mini II available from BEL Japan, Inc. That is, in the present application, the BET specific surface area may refer to the specific surface area measured by the above measurement method.

In the present specification, "Dn" means a particle size distribution, and means a particle size at the n% point in the cumulative distribution of the number of particles according to the particle size. That is, D50 is the particle size (center particle size) at the 50% point in the cumulative distribution of the number of particles according to the particle size, D90 is the particle size at the 90% point in the cumulative distribution of the number of particles according to the particle size, and D10 is the particle size at the 10% point in the cumulative distribution of the number of particles according to the particle size. Meanwhile, the center particle size may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each grain constituting the metal powder.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode composition including a silicon-based active material; a negative electrode conductive material; and a negative electrode binder, wherein the silicon-based active material includes $SiOx$ (x=0) and/or $SiOx$ (0<x<2), and includes 70 parts by weight or more of $SiOx$ (x=0) on the basis of 100 parts by weight of the silicon-based active material, wherein the silicon-based active material includes a carbon coating layer, wherein the negative electrode binder includes a rubber-based binder and an aqueous binder, and wherein a content of the rubber-based binder is higher than that of the aqueous binder.

In an exemplary embodiment of the present application, a binder with excellent elongation properties is generally referred to as a rubber-based binder, and the aqueous binder is well dispersed in an aqueous solvent such as water, has a hydrophilic property, and refers to a binder having a property of not dissolving in an electrolyte or an electrolyte solution that is generally used in a secondary battery.

In order to realize high energy density, the conductive material is used in a minimum amount, and accordingly, the conductive network between active materials during charging and discharging becomes more insufficient. To solve this problem, the negative electrode composition according to the present application can maintain better contact between the silicon-based active materials by including the rubber-based binder with excellent flexibility in a higher content, as compared with the aqueous binder, and improves the tortuosity of the negative electrode itself by minimizing the use amount of the conductive material, which is advantageous for diffusion resistance.

That is, in the case of the negative electrode composition according to the present application, the surface of the silicon-based active material is coated with carbon to increase durability so that a high content of the rubber-based binder can be applied.

In an exemplary embodiment of the present application, there is provided the negative electrode composition in which the silicon-based active material includes $SiOx$ (x=0) and/or $SiOx$ (0<x<2), and includes 70 parts by weight or more of SiOx (x=0) on the basis of 100 parts by weight of the silicon-based active material.

In an exemplary embodiment of the present application, there is provided the negative electrode composition in which the silicon-based active material includes SiOx (x=0), and includes 70 parts by weight or more of SiOx (x=0) on the basis of 100 parts by weight of the silicon-based active material.

In another exemplary embodiment, SiOx (x=0) may be included in amount of 70 parts by weight or more, preferably 80 parts by weight or more, and more preferably 90 parts by weight or more, and 100 parts by weight or less, preferably 99 parts by weight or less, and more preferably 95 parts by weight or less on the basis of 100 parts by weight of the silicon-based active material.

The silicon-based active material according to the present application includes 70 parts by weight or more of SiOx (x=0) on the basis of 100 parts by weight of the silicon-based active material. When compared with a silicon-based active material in which a SiOx (0<x<2)-based active material is used as a main material, the theoretical capacity thereof is higher than that of the silicon-based active material of the present application. That is, if a SiOx (0<x<2)-based active material is used, even when the active material itself is treated in any way, it is not possible to implement conditions equivalent to the charging and discharging capacities of the silicon-based active material of the present invention.

In an exemplary embodiment of the present application, for the silicon-based active material, particularly, pure silicon (Si) particles may be used as a silicon-based active material. The use of pure silicon (Si) particles as the silicon-based active material may mean that, on the basis of 100 parts by weight of the total silicon-based active material as described above, pure Si particles (SiOx (x=0)) not bonded to other particles or elements are included within the above range.

In an exemplary embodiment of the present application, the silicon-based active material may be formed of silicon-based particles having 100 parts by weight of SiOx (x=0) on the basis of 100 parts by weight of the silicon-based active material.

In an exemplary embodiment of the present application, the silicon-based active material may include a metal impurity, and in this case, the impurity is metal that may be generally included in the silicon-based active material, and a content thereof may be 0.1 part by weight or less on the basis of 100 parts by weight of the silicon-based active material.

The capacity of the silicon-based active material is significantly higher than that of a graphite-based active material that is typically used, so that there have been more attempts to apply the same. However, the volume expansion rate of the silicon-based active material during charging/discharging is high, so that only a small amount thereof is mixed and used with a graphite-based active material.

In general, a silicon-based active material is known to have a capacity that is 10 times higher than that of a carbon-based active material, and accordingly, when the silicon-based active material is applied to a negative electrode, it is expected that an electrode having a high level of energy density can be implemented even with a thin thickness.

Therefore, in the present invention, in order to solve problems such as electrode tortuosity and increase in diffusion resistance due to charging and discharging cycles, while using only a silicon-based active material as a negative electrode active material so as to improve capacity performance, the surface of the negative electrode active material is coated with carbon, and a specific binder combination is used.

In an exemplary embodiment of the present application, the silicon-based active material may include silicon-based particles having a particle size distribution of 0.01 um or greater and 30 $\mu$m or less.

The description 'the silicon-based active material includes silicon-based particles having a particle size distribution of 0.01 um or greater and 30 um or less' means including a plurality of individual silicon-based particles having a particle size within the above range, and the number of silicon-based particles included is not limited.

When the silicon-based particle is spherical, the particle size thereof can be expressed as its diameter. However, even when the silicon-based particle has a shape other than spherical, the particle size can be measured in contrast to the case of the spherical shape, and the particle size of the individual silicon-based particle can be measured by a method that is generally known in the art.

An average particle diameter (D50) of the silicon-based active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In an exemplary embodiment of the present application, the silicon-based active material generally has a characteristic BET specific surface area. The BET specific surface area of the silicon-based active material is preferably 0.01 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the carbon coating layer may be formed on the entire surface of the silicon-based active material.

In an exemplary embodiment of the present application, the carbon coating layer may be formed on a portion of the silicon-based active material.

In an exemplary embodiment of the present application, a thickness of the carbon coating layer may be 0.1 um or greater and 10 μm or less.

In an exemplary embodiment of the present application, there is provided the negative electrode composition in which the silicon-based active material is included in an amount of 60 parts by weight or more on the basis of 100 parts by weight of the negative electrode composition.

In another exemplary embodiment, the silicon-based active material may be included in an amount of 60 parts by weight or more, preferably 65 parts by weight or more, and more preferably 70 parts by weight or more, and 97 parts by weight or less, preferably 95 parts by weight or less, and more preferably 90 parts by weight or less, on the basis of 100 parts by weight of the negative electrode composition.

When using the silicon-based active material with a significantly high capacity within the above range, the negative electrode composition according to the present application has a feature that can solve the problems of resistance increase and life reduction by using a specific binder combination.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1 below, in which A is an area and P is a boundary line.

[Equation 1]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based active material, even when the characteristics of the silicon-based active material itself are adjusted as described above, the volume may rapidly expand during the charging/discharging, thereby causing some problems of damaging the conductive path formed in the negative electrode active material layer.

Therefore, in an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a conductive material that may be used for improving conductivity of the negative electrode, has conductivity without causing a chemical change and has a spherical or point shape. Specifically, the point-like conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present application, a content of the functional group (volatile matter) of the point-like conductive material may satisfy a range of 0.01% or more and 1% or less, preferably 0.01% or more and 0.3% or less, and more preferably 0.01% or more and 0.1% or less.

In particular, when the content of the functional group of the point-like conductive material satisfies the above range, a functional group is present on a surface of the point-like conductive material, so that the point-like conductive material can be smoothly dispersed in a solvent when water is used as the solvent.

In an exemplary embodiment of the present application, the point-like conductive material having the content of the functional group within the range described above is included together with the silicon-based active material, and the content of the functional group can be adjusted according to a degree of heat treatment of the point-like conductive material.

That is, in the manufacture of a point-like conductive material, a high functional group content may mean that a large amount of foreign materials are present, and a low functional group content may mean that heat treatment processing has been conducted more frequently.

In an exemplary embodiment of the present application, the particle diameter of the point-like conductive material may be 10 nm to 100 nm, preferably 20 nm to 90 nm, and more preferably 20 nm to 60 nm.

In an exemplary embodiment of the present application, the conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flake, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 um or greater and 1.5 $\mu$m or less, D50 of 2.5 um or greater and 3.5 um or less and D90 of 7.0 um or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 $m^2$/g or greater.

In another exemplary embodiment, the planar conductive material may have a BET specific surface area of 5 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the exemplary embodiment of the present application, the linear conductive material may include SWCNT or MWCNT.

In the exemplary embodiment of the present application, there is provided the negative electrode composition in which the negative electrode conductive material is included in an amount of 0.01 parts by weight or more and 40 parts by weight or less on the basis of 100 parts by weight of the negative electrode composition.

In another exemplary embodiment, the negative electrode conductive material may be included in an amount of 0.01 parts by weight or more and 40 parts by weight or less, preferably 0.01 parts by weight or more and 30 parts by weight or less, and more preferably 0.05 parts by weight or more and 25 parts by weight or less, on the basis of 100 parts by weight of the negative electrode composition.

In the exemplary embodiment of the present application, there is provided the negative electrode composition in which the negative electrode conductive material includes a planar conductive material and a linear conductive material.

In an exemplary embodiment of the present application, the negative electrode conductive material may include a planar conductive material and a linear conductive material, and may include 0.01 part by weight or more and 10 parts by weight or less of the linear conductive material, and 90 parts by weight or more and 99.99 parts by weight or less of the planar conductive material, on the basis of 100 parts by weight of the negative electrode conductive material.

In another exemplary embodiment, the linear conductive material may be included in an amount of 0.01 part by weight or more and 10 parts by weight or less, preferably 0.05 part by weight or more and 5 parts by weight or less, and more preferably 0.1 part by weight or more and 3 parts by weight or less, on the basis of 100 parts by weight of the negative electrode conductive material.

In another exemplary embodiment, the planar conductive material may be included in an amount of 90 parts by weight or more and 99.99 parts by weight or less, preferably 95 parts by weight or more and 99.95 parts by weight or less, and more preferably 97 parts by weight or more and 99.9 parts by weight or less, on the basis of 100 parts by weight of the negative electrode conductive material.

In an exemplary embodiment of the present application, there is provided the negative electrode composition in which the negative electrode conductive material includes a linear conductive material.

In particular, in order to realize high energy density, the conductive material is used in a minimum amount (only SWCNT is used), and thus the conductive network between active materials is further insufficient during charging and discharging. To solve this problem, the negative electrode composition according to the present application can maintain better contact between silicon-based active materials by including the rubber-based binder with excellent flexibility in a higher content than that of the aqueous binder, and improves the tortuosity of the negative electrode itself by minimizing the use amount of the conductive material, which is advantageous for diffusion resistance.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the planar conductive material that is used as the negative electrode conductive material described above has a different structure and role from those of the carbon-based active material that is generally used as the existing negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

That is, in an exemplary embodiment of the present application, artificial graphite or natural graphite, which is a carbon-based active material, has a point-like shape, and a BET specific surface area thereof may satisfy a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

In an exemplary embodiment of the present application, there is provided the negative electrode composition in which the negative electrode binder includes a rubber-based binder and an aqueous binder, and a content of the rubber-based binder is higher than that of the aqueous binder.

In an exemplary embodiment of the present application, the aqueous binder includes at least one selected from the group consisting of polyvinyl alcohol (PVA), polyacrylic acid (PAA), polyethylene glycol (PEG), polyacrylonitrile (PAN), and polyacrylamide (PAM), which can be dissolved in an aqueous solvent such as water. Preferably, the aqueous binder may preferably include polyvinyl alcohol and/or polyacrylic acid, and more preferably polyvinyl alcohol and polyacrylic acid, in view of having excellent resistance to volume expansion/contraction of the silicone-based active material.

The aqueous binder may include an aqueous binder in which hydrogen is substituted with Li, Na, Ca or the like, in view of allowing the aqueous binder to be more easily dispersed in an aqueous solvent such as water when preparing a negative electrode slurry for forming a negative electrode active material layer, and coating an active material more smoothly to improve a binding force.

The aqueous binder has hydrophilic properties and is generally insoluble in an electrolyte or an electrolyte solution used in a secondary battery. These characteristics can impart strong stress or tensile strength to the aqueous binder when applied to a negative electrode or a lithium secondary battery, and accordingly, the problem of volume expansion/contraction caused due to charging and discharging of the silicon-based active material can be effectively suppressed.

In an exemplary embodiment of the present application, there is provided the negative electrode composition in which a weight-average molecular weight of the aqueous binder is 100,000 g/mol or more and 1,000,000 g/mol or less.

In an exemplary embodiment of the present application, the rubber-based binder is a material different from the aqueous binder, and can be defined as a binder that is not well dissolved in an aqueous solvent such as water but can be smoothly dispersed in the aqueous solvent. Specifically, the rubber-based binder may include at least one selected from the group consisting of styrene-butadiene rubber (SBR), hydrogenated nitrile butadiene rubber (HNBR), acrylonitrile butadiene rubber, acrylic rubber, butyl rubber, and fluoro rubber, preferably, at least one selected from the group consisting of styrene-butadiene rubber and hydrogenated nitrile butadiene rubber, and more preferably styrene-butadiene rubber, in view of easy dispersion and excellent phase stability.

In an exemplary embodiment of the present application, the aqueous binder is a polymeric aqueous binder including PAM, PAA, and PAN, and may be prepared by adjusting ratios of PAA and PAN with the PAM as a main component.

In the case of the silicon-based active material, a rubber-based binder with excellent elongation characteristics should be generally used because of its large volume expansion, but when the rubber-based binder is used, there occurs a problem in that slurry gas is generated.

However, in the case of the negative electrode composition according to the present application, the problem of gas generation was solved by coating the silicon-based active material with carbon, and accordingly, the rubber-based binder was included in a higher content than that of the aqueous binder, thereby solving damage to the conductive path due to the volume expansion of the silicon-based active material.

In an exemplary embodiment of the present application, there is provided the negative electrode composition in which the rubber-based binder is included in an amount of 55 parts by weight or more and 90 parts by weight or less, and the aqueous binder is included in an amount of 10 parts by weight or more and 45 parts by weight or less on the basis of 100 parts by weight of the negative electrode binder.

In another exemplary embodiment, the rubber-based binder may be included in an amount of 55 parts by weight or more and 90 parts by weight or less, preferably 55 parts by weight or more and 80 parts by weight or less, and more preferably, 55 parts by weight or more and 70 parts by weight or less on the basis of 100 parts by weight of the negative electrode binder.

In another exemplary embodiment, the aqueous binder may be included in an amount of 10 parts by weight or more and 45 parts by weight or less, preferably 20 parts by weight or more and 45 parts by weight or less, and more preferably, 30 parts by weight or more and 45 parts by weight or less on the basis of 100 parts by weight of the negative electrode binder.

The negative electrode binder according to an exemplary embodiment of the present application serves to hold the active material and the conductive material in order to prevent distortion and structural deformation of the negative electrode structure in volume expansion and relaxation of the silicon-based active material. When the negative electrode binder having the composition and content described above is used, the problems described above can be solved.

In an exemplary embodiment of the present application, the negative electrode binder may be included in an amount of 30 parts by weight or less, on the basis of 100 parts by weight of the negative electrode composition.

In an exemplary embodiment of the present application, the negative electrode binder may be included in an amount of 30 parts by weight or less, preferably 25 parts by weight or less, and more preferably 20 parts by weight or less, and 5 parts by weight or more, and 10 parts by weight or more, on the basis of 100 parts by weight of the negative electrode composition.

In an exemplary embodiment of the present application, there is provided a negative electrode for a lithium secondary battery including: a negative electrode current collector layer; and a negative electrode active material layer including the negative electrode composition according to the present application formed on one surface or both surfaces of the negative electrode current collector layer.

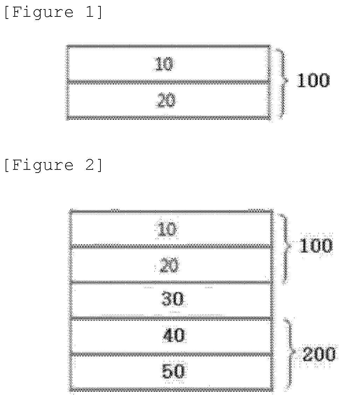

FIG. 1 shows a laminated structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface, but the negative electrode active material layer may be formed on both surfaces of the negative electrode current collector layer.

In an exemplary embodiment of the present application, the negative electrode for a lithium secondary battery may be formed by applying and drying a negative electrode slurry including the negative electrode composition to one surface or both surfaces of the negative electrode current collector layer.

In this case, the negative electrode slurry may include the negative electrode composition described above, and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode composition is minimized to efficiently form the negative electrode active material layer.

In an exemplary embodiment of the present application, the slurry solvent may be used without limitation as long as it can dissolve the negative electrode composition, and specifically, water or NMP may be used.

In an exemplary embodiment of the present application, the negative electrode current collector layer generally has a thickness of 1 um to 100 um. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 $\mu$m or greater and 100 $\mu$m or less and a thickness of the negative electrode active material layer is 20 $\mu$m or greater and 500 $\mu$m or less.

However, the thicknesses may be variously modified depending on a type and use of the negative electrode used, and are not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has appropriate ranges of electrical conductivity and resistance.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 shows a laminated structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a laminated structure with a separator 30 interposed therebetween.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used.

In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Manufacture Examples>**

**<Manufacture of Negative Electrode Composition>**

The negative electrode compositions satisfying the compositions and contents of Table 1 below were prepared, respectively.

[Table 1]

| | Silicon-based active material | | Negative electrode conductive material | | Negative electrode binder | |
|---|---|---|---|---|---|---|
| | Type | Content | Type | Content | Aqueous binder (content) | Rubber-based binder (content) |
| Example 1 | C-coated Si | 89 | SWCNT | 1 | PAM (4.5) | SBR (5.5) |
| Example 2 | C-coated Si | 79.5 | SWCNT/ Plate-like conductive material A | 0.4/9.6 | PAM (4.5) | SBR (5.5) |
| Comparative Example 1 | C-coated Si | 89 | SWCNT | 1 | - | SBR (10) |
| Comparative Example 2 | C-coated Si | 89 | SWCNT | 1 | PAM (10) | - |
| Comparative Example 3 | Si | 89 | SWCNT | 1 | PAM (4.5) | SBR (5.5) |
| Comparative Example 4 | C-coated Si | 79.5 | SWCNT | 0.5 | PAM (8) | PAM (2) |
| Comparative Example 5 | Si | 79.5 | SWCNT/Plate-like conductive material A | 0.4/ 9.6 | - | SBR (10) |
| Comparative Example 6 | SiO | 89 | SWCNT | 1 | PAM (4.5) | SBR (5.5) |
| Comparative Example 7 | SiC | 89 | SWCNT | 1 | PAM (4.5) | SBR (5.5) |
| Comparative Example 8 | C-coated SiO | 89 | SWCNT | 1 | PAM (4.5) | SBR (5.5) |
| Comparative Example 9 | C-coated SiC | 89 | SWCNT | 1 | PAM (4.5) | SBR (5.5) |

In Table 1, the silicon-based active material were Si (average particle diameter (D50): 3.5 pm), SiO (average particle diameter (D50): 6.0 um) and SiC (average particle diameter (D50): 8.5 pm), the plate-like conductive material A had a BET specific surface area of 17 m$^2$/g, D10: 1.7 um, D50: 3.5 $\mu$m, and D90: 6.8um, and SWCNT satisfied a BET specific surface area of around 1000 to 1500 m$^2$/g, and an aspect ratio of 10000 or greater.

The PAM (Polyacrylamide) binder is a binder that has a weight-average molecular weight (Mw) of 500,000 g/mol to 800,000 g/mol, a number-average molecular weight (Mn) of 100,000 to 400,000, and a PDI value of 20 to 50.

The binder was in an aqueous form, and the weight-average molecular weight and the number-average molecular weight were measured using aqueous gel permeation chromatography (GPC).

**<Manufacture of Negative Electrode>**

A negative electrode slurry was prepared by adding distilled water as a solvent for formation of a negative electrode slurry to the negative electrode composition having the composition of Table 1 (solid content concentration: 25 wt%).

Thereafter, a negative electrode active material layer was coated to have a thickness of 38 um on a Cu foil having a thickness of 8 um (negative electrode loading amount: 76.34 mg/25cm$^2$), dried at 130°C for 12 hours, and roll-pressed to have a negative electrode porosity of 40%, so that a negative electrode was manufactured.

For reference, in Comparative Examples 6 to 8 in which the type of active material was different, a negative electrode and a secondary battery as described below were not manufactured, and the amount of slurry gas generation and the capacity of the active material through CHC production were respectively compared and are shown in Table 2.

**<Manufacture of Secondary Battery>**

A positive electrode slurry was prepared by adding $LiNi_{0.6}Co_{0.2}Mn_{0.2}O_2$ (average particle diameter (D50) : 15 um) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry in a weight ratio of 97:1.5:1.5 (solid content concentration: 78 wt%).

The positive electrode slurry was coated on both surfaces of an aluminum current collector (thickness: 12 um) serving as a positive electrode current collector with a loading amount of 537 mg/25 cm$^2$, which was then roll-pressed, and dried in a vacuum oven at 130°C for 10 hours to form a positive electrode active material layer (thickness: 65 um), which was prepared as a positive electrode (thickness of positive electrode: 77 um, porosity: 260).

A lithium secondary battery was manufactured by interposing a polyethylene separator between the positive electrode and the negative electrode of Examples and Comparative Examples and injecting an electrolyte.

The electrolyte was obtained by adding vinylene carbonate to an organic solvent, in which fluoroethylene carbonate (FEC) and diethyl carbonate (DEC) were mixed in a volume ratio of 10:90, in an amount of 3 wt.% on the basis of a total weight of the electrolyte and adding $LiPF_6$ as a lithium salt to a concentration of 1M.

**Experimental Example 1 Measurement of Amount of Negative Electrode Slurry Gas Generation**

5 g of the negative electrode slurry prepared above was put into a 5 cm × 5 cm aluminum pouch, sealed, stored in an oven at 60°C for 24 hours, and then put into a measuring cylinder to measure the volume change for measuring the amount of gas generated. The results are shown in Table 2 below.

**Experimental Example 2 Evaluation of Life Characteristics of Monocell at Room Temperature (4.2-3.0V)**

For the secondary batteries including the negative electrodes prepared in Examples and Comparative Examples, the life evaluation was performed using an electrochemical charger and discharger, and the capacity retention rate was evaluated. The secondary battery was subjected to a cycle test at 4.2-3.0V 1C/0.5C, and the number of cycles at which the capacity retention rate reached 80% was measured.

capacity retention rate (%) = {(discharge capacity at Nth cycle)/(discharge capacity at first cycle)}×100

The results are shown in Table 2 below.

**Experimental Example 3 Monocell Resistance Increase Rate Measurement Evaluation (250 Cycle, @SOC50%, discharge)**

In the test in Experimental Example 2, the capacity retention rate was measured by charging/discharging (4.2-3.0V) at 0.33C/0.33C every 50 cycles, and then discharged at 2.5C pulse and SOC50 to measure the resistance for comparing and analyzing the resistance increase rate.

In addition, for the life characteristic evaluation and the resistance increase rate measurement evaluation, data was calculated at 250 cycles, respectively, and the results are shown in Table 2 below.

[Table 2]

| | Example 1 | Example 2 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| (Amount of Gas Generation) (mL) | 1 | 4 | 10 | 7 | 15 | 6 | 22 | 28 | 30 | 8 | 10 |
| Evaluation of SOH 80% (cycle) life characteristic (4.2-3.0V) | 255 | 253 | 152 | 198 | 248 | 200 | 150 | - | - | - | - |
| Resistance increase rate (%, @250cycle, discharge) | 40 | 43 | 43 | 47 | - | - | - | - | - | - | - |
| Active material capacity (mAh/g) | 3580 | - | - | - | 3600 | - | - | 1600 | 1718 | 1575 | 1700 |

From the results of Table 2, it could be confirmed that the negative electrode composition of the present invention includes the carbon coating layer on the surface of the silicon-based active material to suppress generation of gas due to the reaction with the -OH functional groups, thereby improving the slurry stability and the performance.

Moreover, in order to realize high energy density, the conductive material is used in a minimum amount, and accordingly, the conductive network between active materials during charging and discharging becomes more insufficient. Regarding this problem, it could be confirmed that the negative electrode composition according to the present application can maintain better contact between the silicon-based active materials by including the rubber-based binder with excellent flexibility in a higher content, as compared with the aqueous binder, and improves the tortuosity of the negative electrode itself by minimizing the use amount of the conductive material, which is advantageous for diffusion resistance.

Specifically, when confirming the amount of gas generation in Table 2, it could be confirmed that the surface of the active material was protected by the C coating on the silicon-based active material, thereby reducing the amount of gas generation, and it could be confirmed that the amount of gas generation increased as the amount of the conductive material increased. That is, when Example 2 is compared with Example 1 and Comparative Example 5, the amount of gas generation is greater than that of Example 1. In addition, it could be confirmed that since the surface was coated with C in Example 2, the amount of gas generation was suppressed, as compared with Comparative Example 5.

In addition, Comparative Examples 6 to 9 are cases in which an active material of SiO or SiC was used, instead of Pure Si as in the present invention. In this case, it could be confirmed that Si was present in a nano size, so the amount of gas generation was larger than that of the Examples, and that even if the C coating treatment was performed as in Comparative Examples 8 and 9, a problem occurred because the amount of gas generation was larger than in the Examples. In addition, Comparative Examples 6 to 9 are cases in which the active materials are different. In this case, it could be confirmed that the capacity was very small, as compared with the Examples, so the loading became very high so as to realize the same energy density, which may cause problems during rapid charging, for example.

Additionally, in the case of the C-coated silicon-based active material, it could be confirmed that the electrical conductivity also increased and the resistance increase rate was reduced, as compared with the case where the C-coating was not performed.

**Claims**

1. A negative electrode composition comprising:

    a silicon-based active material;
    a negative electrode conductive material; and
    a negative electrode binder,
    wherein the silicon-based active material comprises SiOx (x=0) and/or SiOx (0<x<2), and includes 70 parts by weight or more of SiOx (x=0) on the basis of 100 parts by weight of the silicon-based active material,
    wherein a carbon coating layer is formed on the silicon-based active material,
    wherein the negative electrode binder comprises a rubber-based binder and an aqueous binder, and
    wherein a content of the rubber-based binder is higher than that of the aqueous binder.

2. The negative electrode composition of claim 1, wherein the carbon coating layer is formed on an entire surface of the silicon-based active material.

3. The negative electrode composition of claim 1, wherein the silicon-based active material is included in an amount of 60 parts by weight or more on the basis of 100 parts by weight of the negative electrode composition.

4. The negative electrode composition of claim 1, wherein the negative electrode conductive material comprises one or more selected from the group consisting of a point-like conductive material, a planar conductive material and a linear conductive material.

5. The negative electrode composition of claim 1, wherein the negative electrode binder is included in an amount of 30 parts by weight or less on the basis of 100 parts by weight of the negative electrode composition.

6. The negative electrode composition of claim 1, wherein the rubber-based binder is included in an amount of 55 parts by weight or more and 90 parts by weight or less, and the aqueous binder is included in an amount of 10 parts by weight or more and 45 parts by weight or less on the basis of 100 parts by weight of the negative electrode binder.

7. The negative electrode composition of claim 1, wherein a thickness of the carbon coating layer is 0.1 um or greater and 10 um or less.

8. A negative electrode for a lithium secondary battery comprising:

a negative electrode current collector layer; and
a negative electrode active material layer comprising the negative electrode composition of any one of claims 1 to 7 formed on one surface or both surfaces of the negative electrode current collector layer.

9. The negative electrode for a lithium secondary battery of claim 8, wherein a thickness of the negative electrode current collector layer is 1 um or greater and 100 um or less, and
wherein a thickness of the negative electrode active material layer is 20 um or greater and 500 um or less.

10. A lithium secondary battery comprising:

a positive electrode;
the negative electrode for a lithium secondary battery of claim 8;
a separator provided between the positive electrode and the negative electrode; and
an electrolyte.

[Figure 1]

[Figure 2]

<table>
<tr><td colspan="2" align="center">**INTERNATIONAL SEARCH REPORT**</td><td>International application No.<br>**PCT/KR2023/008710**</td></tr>
</table>

**A.      CLASSIFICATION OF SUBJECT MATTER**

**H01M 4/134**(2010.01)i; **H01M 4/38**(2006.01)i; **H01M 4/36**(2006.01)i; **H01M 4/62**(2006.01)i; **H01M 4/587**(2010.01)i; **H01M 10/0525**(2010.01)i; **H01M 4/02**(2006.01)i

According to International Patent Classification (IPC) or to both national classification and IPC

**B.      FIELDS SEARCHED**

Minimum documentation searched (classification system followed by classification symbols)

H01M 4/134(2010.01); C01B 32/05(2017.01); C01B 32/21(2017.01); H01M 10/052(2010.01); H01M 4/13(2010.01); H01M 4/36(2006.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 조성물(anode composition), 리튬이차전지(lithium secondary battery), 음극 바인더(anode binder), 실리콘계 활물질(silicon active material), 탄소 코팅층(carbon coating layer)

**C.      DOCUMENTS CONSIDERED TO BE RELEVANT**

| Category* | Citation of document, with indication, where appropriate, of the relevant passages | Relevant to claim No. |
|---|---|---|
| X | KR 10-2014-0147052 A (LG CHEM, LTD.) 29 December 2014 (2014-12-29)<br>     See paragraphs [0045], [0047], [0083] and [0094]; and claims 13, 20 and 22-23. | 1-10 |
| A | KR 10-2021-0077642 A (LG ENERGY SOLUTION, LTD.) 25 June 2021 (2021-06-25)<br>     See entire document. | 1-10 |
| A | KR 10-2020-0032958 A (UNIST(ULSAN NATIONAL INSTITUTE OF SCIENCE AND TECHNOLOGY)) 27 March 2020 (2020-03-27)<br>     See entire document. | 1-10 |
| A | US 2018-0269471 A1 (ZENLABS ENERGY, INC.) 20 September 2018 (2018-09-20)<br>     See entire document. | 1-10 |
| A | KR 10-2021-0079862 A (POSCO et al.) 30 June 2021 (2021-06-30)<br>     See entire document. | 1-10 |

☐ Further documents are listed in the continuation of Box C.          ☑ See patent family annex.

| | |
|---|---|
| *       Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **04 October 2023** | **04 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/008710**

| Patent document cited in search report | | | Publication date (day/month/year) | Patent family member(s) | | | Publication date (day/month/year) |
|---|---|---|---|---|---|---|---|
| KR | 10-2014-0147052 | A | 29 December 2014 | CN | 105308780 | A | 03 February 2016 |
| | | | | CN | 105308780 | B | 11 September 2018 |
| | | | | US | 2015-0125747 | A1 | 07 May 2015 |
| | | | | US | 9515321 | B2 | 06 December 2016 |
| | | | | WO | 2014-204214 | A1 | 24 December 2014 |
| KR | 10-2021-0077642 | A | 25 June 2021 | CN | 114586197 | A | 03 June 2022 |
| | | | | EP | 4037013 | A1 | 03 August 2022 |
| | | | | US | 2022-0367862 | A1 | 17 November 2022 |
| | | | | WO | 2021-125827 | A1 | 24 June 2021 |
| KR | 10-2020-0032958 | A | 27 March 2020 | KR | 10-2147727 | B1 | 25 August 2020 |
| US | 2018-0269471 | A1 | 20 September 2018 | CN | 102630355 | A | 08 August 2012 |
| | | | | EP | 2497144 | A2 | 12 September 2012 |
| | | | | EP | 2497144 | A4 | 23 April 2014 |
| | | | | JP | 2013-510405 | A | 21 March 2013 |
| | | | | KR | 10-2012-0128125 | A | 26 November 2012 |
| | | | | TW | 201133983 | A | 01 October 2011 |
| | | | | US | 10003068 | B2 | 19 June 2018 |
| | | | | US | 11309534 | B2 | 19 April 2022 |
| | | | | US | 2011-0111294 | A1 | 12 May 2011 |
| | | | | US | 2016-0006021 | A1 | 07 January 2016 |
| | | | | US | 2022-0209219 | A1 | 30 June 2022 |
| | | | | US | 9190694 | B2 | 17 November 2015 |
| | | | | WO | 2011-056847 | A2 | 12 May 2011 |
| | | | | WO | 2011-056847 | A3 | 24 November 2011 |
| KR | 10-2021-0079862 | A | 30 June 2021 | KR | 10-2273114 | B1 | 05 July 2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220076787
- JP 2009080971 A